# EUROPEAN PATENT APPLICATION

(11) **EP 4 790 936 A1**
(43) Date of publication of application: **12.08.2026**
(21) Application number: 24884837.6
(22) Date of filing: 30.10.2024
(51) Int. Cl.: H04L 5/00

(54) **COMMUNICATION METHOD AND COMMUNICATION APPARATUS**

(30) Priority: 31.10.2023 CN 202311438718
(71) Applicant: HUAWEI TECHNOLOGIES CO., LTD., Shenzhen 518129 (CN)
(72) Inventor: HUANG, Xiuxuan, Shenzhen, Guangdong 518129 (CN); LI, Xinxian, Shenzhen, Guangdong 518129 (CN); DING, Mengying, Shenzhen, Guangdong 518129 (CN); PENG, Jinlin, Shenzhen, Guangdong 518129 (CN)
(74) Representative: MERH-IP Matias Erny Reichl Hoffmann Patentanwälte PartG mbB
(86) International application number: PCT/CN2024/128581
(87) International publication number: WO 2025/092837

(57) **Abstract**

This application provides a communication method and a communication apparatus. The method includes: A terminal receives downlink control information DCI from a network device, where the DCI is used to schedule M physical shared channels in a plurality of cells, a first cell is one of the plurality of cells, the first cell includes N physical shared channels scheduled by using the DCI, N is an integer greater than 1, and M is an integer greater than N; and further, the terminal transmits the M physical shared channels based on the DCI. According to the method, when a single piece of DCI is used to jointly schedule physical shared channels of a plurality of cells, a plurality of physical shared channels in a same cell may be scheduled by using a single piece of DCI. This helps improve efficiency of scheduling the physical shared channels by using the DCI.

## Description

This application claims priority to Chinese Patent Application No. 202311438718.4, filed with the China National Intellectual Property Administration on October 31, 2023 and entitled "COMMUNICATION METHOD AND COMMUNICATION APPARATUS", which is incorporated herein by reference in its entirety.

### TECHNICAL FIELD

This application relates to the field of communication technologies, and in particular, to a communication method and a communication apparatus.

### BACKGROUND

Carrier aggregation (carrier aggregation, CA) is a technology that aggregates a plurality of carrier components (carrier component, CC) to support a larger transmission bandwidth. CA supports aggregation of CCs with a same sub-carrier spacing (sub-carrier spacing, SCS) or different sub-carrier spacings. For example, aggregation is supported among CC 1 with an SCS of 15 kHz, CC 2 with an SCS of 15 kHz, and CC 3 with an SCS of 60 kHz.

When a plurality of CCs in CA scenarios are scheduled by using downlink control information (downlink control information, DCI), the DCI can be used to schedule only one physical downlink shared channel (physical downlink share channel, PDSCH) or one physical uplink shared channel (physical uplink share channel, PUSCH) on each CC.

In other words, in CA scenarios, the scheduling of a plurality of PDSCHs/PUSCHs on some CCs requires a plurality of pieces of DCI, resulting in low scheduling efficiency.

### SUMMARY

Embodiments of this application provide a communication method and a communication apparatus, to help improve efficiency of scheduling PDSCHs/PUSCHs by using DCI.

According to a first aspect, this application provides a communication method. An example in which a terminal performs the method is used. The method includes: The terminal receives downlink control information DCI from a network device, where the DCI is used to schedule M physical shared channels in a plurality of cells, a first cell is one of the plurality of cells, the first cell includes N physical shared channels scheduled by using the DCI, N is an integer greater than 1, and M is an integer greater than N; and further, the terminal transmits the M physical shared channels based on the DCI.

In the method described in the first aspect, a single piece of DCI may be used to jointly schedule physical shared channels of a plurality of cells, and a plurality of physical shared channels in a same cell may be jointly scheduled by using the DCI. Compared with a manner in which only one physical shared channel in a same cell can be scheduled by using the DCI, this helps improve scheduling efficiency of scheduling a physical shared channel in a cell by using DCI.

In a possible implementation, the DCI includes a first field, the first field includes a first subfield and a second subfield, the first subfield is applied to the N physical shared channels in the first cell, the second subfield is applied to one physical shared channel in a second cell, and the second cell is one of the plurality of cells other than the first cell. When the possible implementation is implemented, a same subfield may be used to indicate same information for all physical shared channels in a same cell, thereby helping reduce a payload size of DCI.

In a possible implementation, the DCI includes a second field, and values of second fields of the M physical shared channels are the same.

In a possible implementation, the second field is a time domain resource assignment TDRA field, the TDRA field indicates a first index value, the first index value indicates a second index value group, a second index value in the second index value group is in one-to-one correspondence with a cell among the plurality of cells, the second index value indicates a time domain resource set, and the time domain resource set includes time domain resources of different physical shared channels in the cell corresponding to the second index value. When the possible implementation is implemented, time domain resources of physical shared channels may be separately determined by using one piece of information indicated by the TDRA field, thereby helping reduce a payload size of DCI.

In a possible implementation, the DCI includes a third field, the third field includes M subfields, and the M subfields are respectively applied to the M physical shared channels.

In a possible implementation, the physical shared channel is a physical downlink shared channel, and the terminal sends HARQ feedback information to the network device, where a quantity of bits of the HARQ feedback information is a quantity of transport blocks carried on maximum quantities of schedulable physical downlink shared channels in the plurality of cells.

In a possible implementation, the HARQ feedback information includes a plurality of bit groups, a bit group in the plurality of bit groups is in one-to-one correspondence with a cell among the plurality of cells, a bit in the bit group is in one-to-one correspondence with a transport block of a physical downlink shared channel in the cell corresponding to the bit group, and a bit in the bit group indicates whether a transport block corresponding to the bit is successfully received.

In a possible implementation, the terminal sends first capability information and second capability information to the network device, where the first capability information indicates that the terminal supports multi-cell scheduling, and the second capability information indicates that the terminal supports scheduling of a plurality of physical shared channels in a same cell.

In a possible implementation, the terminal receives first configuration information from the network device, where the first configuration information is used to configure a maximum quantity of schedulable physical shared channels in each of the plurality of cells.

According to a second aspect, this application provides a communication method. An example in which a network device performs the method is used. The method includes: The network device sends downlink control information DCI to a terminal, where the DCI is used to schedule M physical shared channels in a plurality of cells, a first cell is one of the plurality of cells, the first cell includes N physical shared channels scheduled by using the DCI, N is an integer greater than 1, and M is an integer greater than N; and further, the network device transmits the M physical shared channels based on the DCI.

For beneficial effects obtained based on the method described in the second aspect, refer to descriptions of beneficial effects obtained based on the method described in the first aspect.

In a possible implementation, the DCI includes a first field, the first field includes a first subfield and a second subfield, the first subfield is applied to the N physical shared channels in the first cell, the second subfield is applied to one physical shared channel in a second cell, and the second cell is one of the plurality of cells other than the first cell.

In a possible implementation, the DCI includes a second field, and values of second fields of the M physical shared channels are the same.

In a possible implementation, the second field is a time domain resource assignment TDRA field, the TDRA field indicates a first index value, the first index value indicates a second index value group, a second index value in the second index value group is in one-to-one correspondence with a cell among the plurality of cells, the second index value indicates a time domain resource set, and the time domain resource set includes time domain resources of different physical shared channels in the cell corresponding to the second index value.

In a possible implementation, the DCI includes a third field, the third field includes M subfields, and the M subfields are respectively applied to the M physical shared channels.

In a possible implementation, the physical shared channel is a physical downlink shared channel, the network device receives HARQ feedback information from the terminal, where a quantity of bits of the HARQ feedback information is a quantity of transport blocks carried on maximum quantities of schedulable physical downlink shared channels in the plurality of cells.

In a possible implementation, the HARQ feedback information includes a plurality of bit groups, a bit group in the plurality of bit groups is in one-to-one correspondence with a cell among the plurality of cells, a bit in the bit group is in one-to-one correspondence with a transport block of a physical downlink shared channel in the cell corresponding to the bit group, and a bit in the bit group indicates whether a transport block corresponding to the bit is successfully received.

In a possible implementation, the network device receives first capability information and second capability information from the terminal, where the first capability information indicates that the terminal supports multi-cell scheduling, and the second capability information indicates that the terminal supports scheduling of a plurality of physical shared channels in a same cell.

In a possible implementation, the network device sends first configuration information to the terminal, where the first configuration information is used to configure a maximum quantity of schedulable physical shared channels in each of the plurality of cells.

According to a third aspect, this application provides a communication apparatus. The communication apparatus may be a terminal, or may be an apparatus in a terminal, or may be an apparatus that can be used in combination with a terminal. The communication apparatus may alternatively be a chip system. The communication apparatus may perform the method described in the first aspect. A function of the communication apparatus may be implemented by hardware, or may be implemented by hardware executing corresponding software. The hardware or the software includes one or more units or modules corresponding to the foregoing function. The unit or the module may be software and/or hardware. For operations performed by the communication apparatus and beneficial effects, refer to the method and the beneficial effects in the first aspect.

According to a fourth aspect, this application provides a communication apparatus. The communication apparatus may be a network device, an apparatus in a network device, or an apparatus that can be used in combination with a network device. The communication apparatus may alternatively be a chip system. The communication apparatus may perform the method in the second aspect. A function of the communication apparatus may be implemented by hardware, or may be implemented by hardware executing corresponding software. The hardware or the software includes one or more units or modules corresponding to the foregoing function. The unit or the module may be software and/or hardware. For operations performed by the communication apparatus and beneficial effect, refer to the method and the beneficial effect in the second aspect.

According to a fifth aspect, this application provides a communication apparatus. The communication apparatus includes a processor and an interface circuit. The interface circuit is configured to: receive a signal from another communication apparatus other than the communication apparatus and transmit the signal to the processor; or send a signal from the processor to another communication apparatus other than the communication apparatus. The processor is configured to implement the method described in the first aspect by using a logic circuit or by executing code instructions, or the processor is configured to implement the method described in the second aspect by using a logic circuit or by executing code instructions.

According to a sixth aspect, this application provides a computer-readable storage medium. The storage medium stores a computer program or instructions, and when the computer program or the instructions are executed by a communication apparatus, the method described in the first aspect is implemented, or the method described in the second aspect is implemented.

According to a seventh aspect, this application provides a computer program product including instructions. When a communication apparatus reads and executes the instructions, the communication apparatus is enabled to perform the method described in the first aspect, or the communication apparatus is enabled to perform the method described in the second aspect.

According to an eighth aspect, this application provides a communication system, including a communication apparatus configured to perform the method described in the first aspect and a communication apparatus configured to perform the method described in the second aspect.

### BRIEF DESCRIPTION OF DRAWINGS

FIG. 1 is a diagram of a communication system according to an embodiment of this application;
FIG. 2 is a diagram of carrier aggregation according to an embodiment of this application;
FIG. 3a to FIG. 3c are diagrams of scheduling a physical shared channel by using several types of DCI according to an embodiment of this application;
FIG. 4 is a diagram of scheduling a PDSCH by using DCI according to an embodiment of this application;
FIG. 5 is a schematic flowchart of a communication method according to an embodiment of this application;
FIG. 6 is a diagram of determining a time domain resource of each physical shared channel based on a TDRA field according to an embodiment of this application;
FIG. 7 is a diagram of a maximum quantity of schedulable PDSCHs by using DCI according to an embodiment of this application;
FIG. 8a and FIG. 8b are diagrams of a PDSCH actually scheduled by using DCI according to an embodiment of this application;
FIG. 9 is a diagram of a structure of a communication apparatus according to an embodiment of this application; and
FIG. 10 is a diagram of a structure of another communication apparatus according to an embodiment of this application.

### DESCRIPTION OF EMBODIMENTS

For ease of specific understanding of embodiments of this application, the following first describes a system architecture in embodiments of this application.

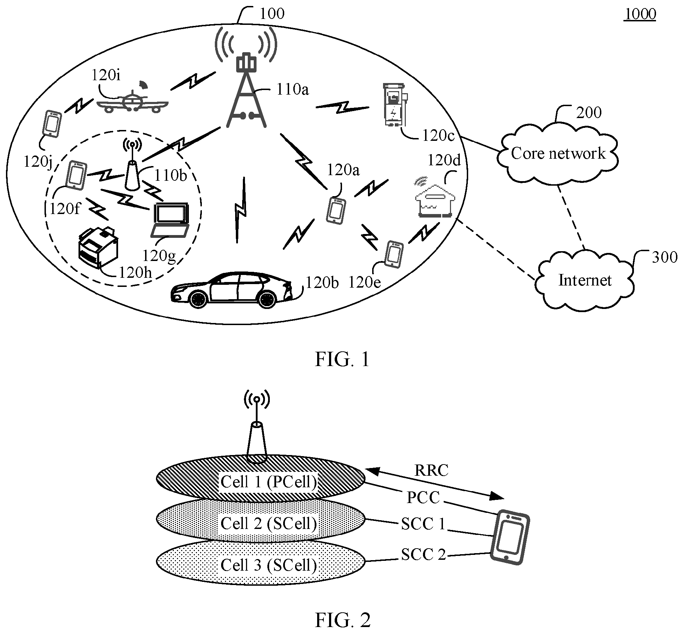

FIG. 1 is a diagram of an architecture of a communication system 1000 to which an embodiment of this application is applied. As shown in FIG. 1, the communication system includes a radio access network (radio access network, RAN) 100 and a core network 200. Optionally, the communication system 1000 may further include an internet 300. The RAN 100 includes at least one RAN node (for example, 110a and 110b in FIG. 1, which are collectively referred to as 110), and may further include at least one terminal (for example, 120a to 120j in FIG. 1, which are collectively referred to as 120). The RAN 100 may alternatively include another RAN node, for example, a wireless relay device and/or a wireless backhaul device (not shown in FIG. 1). The terminal 120 is connected to the RAN node 110 in a wireless manner, and the RAN node 110 is connected to the core network 200 in a wireless or wired manner. A core network device in the core network 200 and the RAN node 110 in the RAN 100 may be different and separate physical devices, or may be a same physical device that integrates a logical function of the core network device and a logical function of the RAN node. The terminals may be connected to each other in a wired or wireless manner and the RAN nodes may be connected to each other in a wired or wireless manner. It should be noted that the RAN node 110 may also be referred to as a network device 110 in the following.

The RAN 100 may be an evolved universal terrestrial radio access (evolved universal terrestrial radio access, E-UTRA) system, a new radio (new radio, NR) system, or a future radio access system defined in a 3rd generation partnership project (3rd generation partnership project, 3GPP). The RAN 100 may alternatively include the foregoing two or more different radio access systems. The RAN 100 may alternatively be an open RAN (open RAN, O-RAN).

The RAN node, also referred to as a radio access network device, a RAN entity, or an access node, is configured to help a terminal access a communication system in a wireless manner. In an application scenario, the RAN node may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation NodeB in a 6th generation (6th generation, 6G) mobile communication system, or a base station in a future mobile communication system. The RAN node may be a macro base station (for example, 110a in FIG. 1), may be a micro base station or an indoor base station (for example, 110b in FIG. 1), or may be a relay node or a donor node.

In another application scenario, a plurality of RAN nodes may cooperate to help a terminal implement radio access, and different RAN nodes separately implement a part of functions of a base station. For example, the RAN node may be a central unit (central unit, CU), a distributed unit (distributed unit, DU), or a radio unit (radio unit, RU). The CU herein completes functions of a radio resource control protocol layer and a packet data convergence protocol (packet data convergence protocol, PDCP) layer of the base station, and may further complete functions of a service data adaptation protocol (service data adaptation protocol, SDAP) layer. The DU completes functions of a radio link control layer and a medium access control (medium access control, MAC) layer of the base station, and may further complete some or all functions of a physical layer. For specific descriptions of the foregoing protocol layers, refer to related technical specifications in 3GPP. The RU may be configured to implement a transceiver function of a radio frequency signal. The CU and the DU may be two independent RAN nodes, or may be integrated into a same RAN node, for example, integrated into a baseband unit (baseband unit, BBU). The RU may be included in a radio frequency device, for example, included in a remote radio unit (remote radio unit, RRU) or an active antenna unit (active antenna unit, AAU). The CU may be further classified into two types of RAN nodes: CU-control plane and CU-user plane.

In different systems, the RAN node may have different names. For example, in an O-RAN system, a CU may be referred to as an open CU (open CU, O-CU), a DU may be referred to as an open DU (open DU, O-DU), and an RU may be referred to as an open RU (open RU, O-RU). The RAN node in embodiments of this application may be implemented by using a software module, a hardware module, or a combination of a software module and a hardware module. For example, the RAN node may be a server loaded with a corresponding software module. A specific technology and a specific device form that are used by the RAN node are not limited in embodiments of this application. For ease of description, the following is described by using an example in which the base station is used as a RAN node.

A terminal is a device having a wireless transceiver function, and may send a signal to the base station, or receive a signal from the base station. The terminal may alternatively be referred to as a terminal device, user equipment (user equipment, UE), a mobile station, a mobile terminal, or the like. The terminal may be widely used in various scenarios, for example, device-to-device (device-to-device, D2D), vehicle-to-everything (vehicle-to-everything, V2X) communication, machine-type communication (machine-type communication, MTC), internet of things (internet of things, IOT), virtual reality, augmented reality, industrial control, autonomous driving, telemedicine, smart grid, smart furniture, smart office, smart wearable, smart transportation, and smart city. The terminal may be a mobile phone, a tablet computer, a computer with a wireless transceiver function, a wearable device, a vehicle, an airplane, a ship, a robot, a robotic arm, a smart home device, or the like. A specific technology and a specific device form that are used by the terminal are not limited in embodiments of this application.

The base station and the terminal may be fixed or movable. The base station and the terminal may be deployed on land, including indoors or outdoors, hand-held or vehicle-mounted; may be deployed on water; or may be deployed on an airplane, a balloon, or an artificial satellite. Application scenarios of the base station and the terminal are not limited in embodiments of this application.

Roles of the base station and the terminal may be relative. For example, a helicopter or uncrewed aerial vehicle 120i in FIG. 1 may be configured as a mobile base station. For the terminal 120j accessing the radio access network 100 via 120i, the terminal 120i is a base station. However, for the base station 110a, 120i is a terminal. In other words, communication between 110a and 120i is performed based on a radio air interface protocol. Certainly, communication between 110a and 120i may alternatively be performed based on an interface protocol between base stations. In this case, for 110a, 120i is also a base station. Therefore, both the base station and the terminal may be collectively referred to as communication apparatuses, 110a and 110b each in FIG. 1 may be referred to as a communication apparatus having a function of a base station, and 120a to 120j each in FIG. 1 may be referred to as a communication apparatus having a function of a terminal.

Communication between the base station and the terminal, between the base stations, or between the terminals may be performed over licensed spectrums, or may be performed over unlicensed spectrums, or may be performed over both the licensed spectrums and the unlicensed spectrums. Communication may be performed over spectrums below 6 gigahertz (gigahertz, GHz), or may be performed over spectrums above 6 GHz, or may be performed over both the spectrums below 6 GHz and the spectrums above 6 GHz. A spectrum resource used for wireless communication is not limited in embodiments of this application.

In embodiments of this application, a function of the base station may be performed by a module (for example, a chip) in the base station, or may be performed by a control subsystem including the function of the base station. The control subsystem including the function of the base station herein may be a control center in the foregoing application scenarios, such as the smart grid, the industrial control, the smart transportation, and the smart city. The function of the terminal may alternatively be performed by a module (for example, a chip or a modem) in the terminal, or may be performed by an apparatus including the function of the terminal.

In this application, the base station sends a downlink signal or downlink information to the terminal, where the downlink information is carried on a downlink channel; and the terminal sends an uplink signal or uplink information to the base station, where the uplink information is carried on an uplink channel. To communicate with the base station, the terminal needs to establish a wireless connection to a cell controlled by the base station. The cell that establishes the wireless connection to the terminal is referred to as a serving cell of the terminal. When communicating with the serving cell, the terminal is further interfered by a signal from a neighboring cell.

It may be understood that in embodiments of this application, a PDSCH, a PDCCH, and a PUSCH are only used as examples of a downlink data channel, a downlink control channel, and an uplink data channel. In different systems and different scenarios, a data channel and a control channel may have different names. This is not limited in embodiments of this application.

For ease of understanding related content in embodiments of this application, the following further explains and describes some terms in embodiments of this application. This part is merely for ease of understanding, and cannot be considered as a disclosure or a specific limitation on the technical solutions of this application.

### 1. Cell (cell)

The cell is a set of resources managed by a base station, including a frequency domain resource and a space domain resource. The frequency domain resource of the cell includes an uplink frequency domain resource and/or a downlink frequency domain resource. The space domain resource of the cell may be a space domain resource corresponding to one beam or a group of beams, which may alternatively be understood as that one cell corresponds to one specific physical coverage area. In embodiments of this application, different cells may be managed by different base stations. For example, a cell #1 and a cell #2 may be managed by different base stations. In this case, it may be considered as that the cell #1 and the cell #2 are not co-sited. The cell #1 and the cell #2 may alternatively be managed by a same base station, and have a same baseband processing unit and/or a same radio frequency processing unit. This is not specifically limited in this application.

Based on different frequency band ranges in which cells are located (or understood as frequency band ranges corresponding to cells), a cell in a range of 450 MHz to 6000 MHz may be referred to as a cell in frequency range (frequency range, FR) 1 or a low-frequency cell, and a cell in a range of 24250 MHz to 52600 MHz is referred to as a cell in FR 2 or a high-frequency cell. It should be noted that there is a one-to-one correspondence between a cell and a carrier. In a case in which no logical conflict occurs, the cell and the carrier may be used interchangeably. In other words, the frequency band range in which the cell is located may be understood as a frequency band range in which a frequency of a carrier corresponding to the cell, or may be referred to as an operating frequency band of the cell, a frequency band in which the cell is located, or the like.

### 2. CA

Refer to FIG. 2. CA is a technique in which two or more CCs are aggregated together to support a larger transmission bandwidth. In other words, in CA, frequency resource integration can be implemented, and spectrum resources of a same frequency band or different frequency bands can be aggregated for use by terminals, thereby improving resource utilization of an entire network.

When CA is configured for the terminal, the terminal may have a plurality of serving cells, and the plurality of serving cells include one primary cell (primary cell, PCell) and at least one SCell. The PCell is a cell in which the terminal and a network device perform initial connection establishment (connection establishment), or a cell in which the terminal performs radio resource control (radio resource control, RRC) connection reestablishment. The PCell is responsible for radio resource control RRC communication with the terminal, and a CC corresponding to the PCell is referred to as a primary component carrier (primary component carrier, PCC). The SCell is added, modified, or released by using an RRC connection reconfiguration message after an initial security activation procedure (initial security activation procedure). The SCell is used for providing an additional radio resource, and there is no RRC communication between the SCell and the terminal. It should be noted that, in a CA scenario, aggregation of cells with a same SCS may be supported, or aggregation of cells with different SCSs may be supported.

### 3. DCI

A network device sends the DCI to a terminal through a physical downlink control channel (physical downlink control channel, PDCCH), where the DCI includes scheduling information of a physical shared channel. In a possible implementation, the DCI includes control information related to data transmission, for example, resource assignment information for data transmission, format information of an uplink/downlink resource in a slot, and power control information of a physical shared channel and a signal; information about a dynamic slot configuration; and resource preemption information. Further, after detecting the DCI, the terminal transmits the physical shared channel based on the DCI. It should be noted that the physical shared channel mentioned in this application includes a PDSCH and a PUSCH. Unless otherwise specified in the following, the physical shared channel may be a PDSCH, or may be a PUSCH. It should be noted that, in this application, the term "transmission/transmit" encompasses "sending" and "receiving". If "transmission" is performed by a transmitting side, "transmission" is equivalent to "sending". If "transmission" is performed by a receiving side, "transmission" is equivalent to "receiving". For example, "the terminal transmits the PDSCH" is equivalent to "the terminal receives the PDSCH", and "the terminal transmits the PUSCH" is equivalent to "the terminal sends the PUSCH".

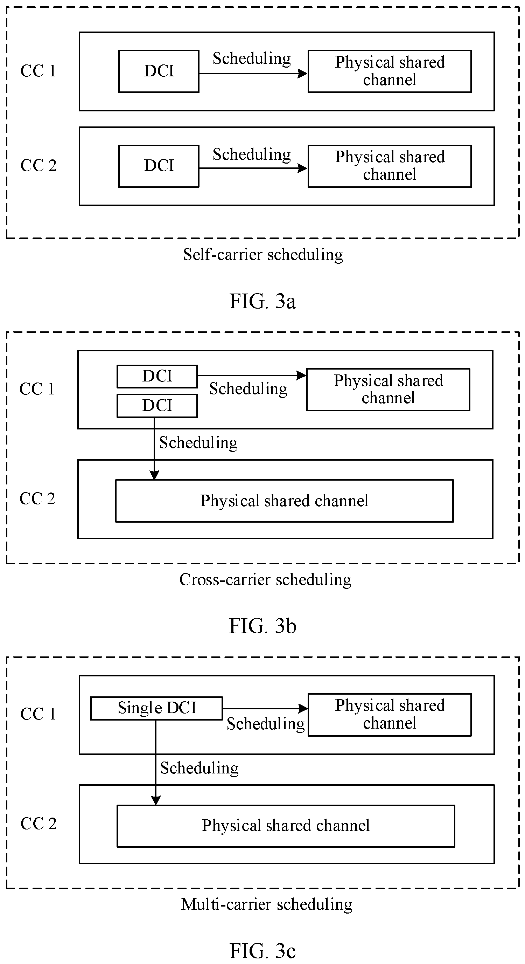

Based on a relationship between a carrier on which DCI is sent and a scheduled physical shared channel, DCI may be classified into the following three types:
1. DCI for self-carrier scheduling: For example, as shown in FIG. 3a, DCI for scheduling a physical shared channel on CC 1 is sent on the CC 1, and DCI for scheduling a physical shared channel on CC 2 is also sent on the CC 2, where a DCI format of the DCI may be a DCI format 0_0, a DCI format 1_0, a DCI format 0_1, a DCI format 1_1, a DCI format 0_2, or a DCI format 1_2.
2. DCI for cross-carrier scheduling: For example, as shown in FIG. 3b, DCI for scheduling a physical shared channel on CC 2 is sent on CC 1, where a DCI format of the DCI may be a DCI format 0_1, a DCI format 1_1, a DCI format 0_2, or a DCI format 1_2.
3. DCI for multi-carrier scheduling, also referred to as multi-cell scheduling DCI or single (single) DCI: As shown in FIG. 3c, DCI for scheduling a physical shared channel on CC 1 and DCI for scheduling a physical shared channel on CC 2 are same DCI (that is, single DCI in FIG. 3a to FIG. 3c), and the single DCI is sent on the CC 1. A DCI format of the single DCI may be a DCI format 0_3 or a DCI format 1_3. It should be noted that a plurality of CCs scheduled by using the DCI for multi-carrier scheduling usually correspond to a same SCS. In addition, for a CC scheduled by using the DCI for multi-carrier scheduling, a quantity of physical shared channels that can be scheduled by using the DCI and that is on the CC is usually 1.
4. Hybrid automatic repeat request (hybrid automatic repeat request, HARQ) feedback information

In a wireless communication system, a HARQ technology is usually used between a transmitting side and a receiving side to improve reliability of data transmission. The transmitting side sends a transport block (transport block, TB) to the receiving side. If the receiving side successfully receives the TB, the receiving side feeds back an acknowledgement (acknowledgement, ACK) to the transmitting side. If the receiving side fails to receive the TB, the receiving side feeds back a negative acknowledgement (negative acknowledgement, NACK) message to the transmitting side, and the transmitting side retransmits the TB after receiving the NACK. The HARQ feedback information is used to feed back reception statuses such as PDSCH reception, semi-persistent scheduling (semi-persistent scheduling, SPS) PDSCH reception, and SPS PDSCH release (release) reception. The HARQ feedback information may be carried on a physical uplink control channel (physical uplink control channel, PUCCH), or may be carried on a PUSCH.

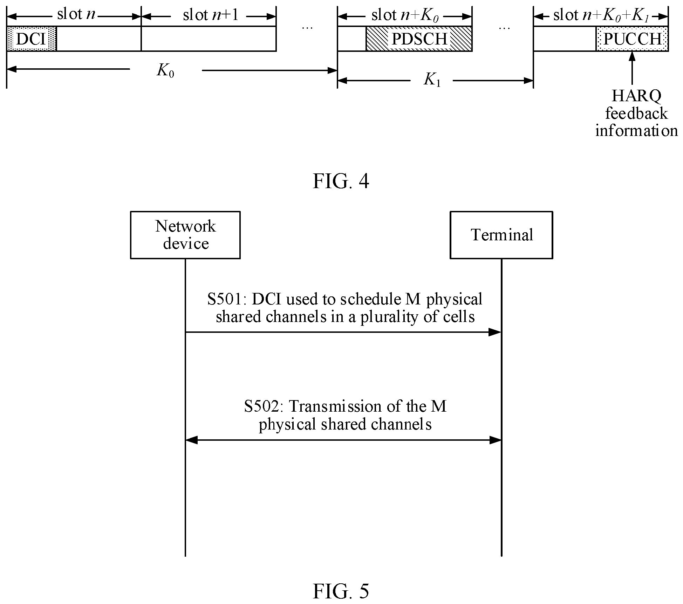

For example, as shown in FIG. 4, a network device sends, in a slot (slot) n, DCI used to schedule a PDSCH. The DCI indicates a terminal to receive the PDSCH in a slot n+*K*₀, and feed back, on a PUCCH in a slot n+*K*₀+*K*₁, HARQ feedback information corresponding to the PDSCH. The DCI includes a value of *K*₀, a value of *K*₁, and indication information that indicates resource information of the PUCCH. *K*₀ may be understood as an offset between a slot in which the DCI is located and a slot in which the PDSCH is located, and *K*₁ may be understood as an offset between the slot in which the PDSCH is located and a slot in which the HARQ feedback information is located.

In a possible implementation, the terminal may feed back a plurality of pieces of HARQ feedback information in one uplink slot by using a HARQ codebook, and one bit in the HARQ codebook may indicate HARQ feedback information of one TB or HARQ feedback information of one HARQ process. Generally, the HARQ codebook includes a semi-persistent codebook (which may also be referred to as a type 1 HARQ-ACK codebook or a type 1 semi-persistent codebook) and a dynamic codebook (which may also be referred to as a type 2 HARQ-ACK codebook or a type 2 dynamic codebook). The network device may indicate, by using an RRC parameter (for example, a pdsch-HARQ-ACK-Codebook parameter), a type of a HARQ-ACK codebook generated by the terminal.

The type 2 dynamic codebook is a generation mode of a codebook that dynamically changes based on actual data scheduling. The dynamic codebook is generated based on a cumulative count and a total count of {Serving cell (Serving Cell), PDCCH monitoring occasion (monitoring occasion)}-pairs (pair). The cumulative count is indicated by a counter downlink assignment index (counter downlink assignment index, C-DAI). The total count is indicated by a total downlink assignment index (total downlink assignment index, T-DAI). The C-DAI is included in the DCI, and represents a cumulative number of pairs, from a {Serving Cell, PDCCH monitoring occasion}-pair of a PDSCH corresponding to a smallest cell index value in PDSCHs jointly scheduled by using the DCI, to a current serving cell and a current PDCCH monitoring occasion. The cumulation is first performed in a sequence of serving cell indexes and then in a sequence of PDCCH monitoring occasion indexes. The T-DAI is included in the DCI, and represents a total number, of pairs from a {Serving Cell, PDCCH monitoring occasion}-pair of a PDSCH corresponding to a smallest cell index in PDSCHs scheduled by using the DCI, until a current PDCCH monitoring occasion is reached, where the total number may be updated in each PDCCH monitoring occasion. In this application, the downlink assignment index and downlink assignment indication have same meaning.

In conclusion, in CA scenarios, when a plurality of physical shared channels in some cells need to be scheduled, a plurality of pieces of DCI need to be used for scheduling, and scheduling efficiency is low. To improve efficiency of scheduling a physical shared channel by using DCI, this application provides a communication method and a communication apparatus. The following describes in detail the communication method and the communication apparatus provided in embodiments of this application with reference to the accompanying drawings.

FIG. 5 is a schematic flowchart of a communication method according to an embodiment of this application. As shown in FIG. 5, the communication method includes the following step S501 and step S502. An example in which the method shown in FIG. 5 is performed by a terminal and a network device is used for description. It may be understood that the method shown in FIG. 5 may alternatively be performed by a module (for example, a chip) in the terminal and a module (for example, a chip, a CU, or a DU) in the network device.

S501: The network device sends DCI to the terminal, where the DCI is used to schedule M physical shared channels in a plurality of cells. The plurality of cells scheduled by using the DCI include a first cell, and the first cell includes N physical shared channels scheduled by using the DCI, where N is an integer greater than 1, and M is an integer greater than N. Correspondingly, the terminal receives the DCI from the network device.

When the M physical shared channels in the plurality of cells need to be scheduled, the network device sends a single piece of DCI to the terminal, where the DCI is single DCI, and the DCI indicates time domain resource assignment information and frequency domain resource assignment information of the M scheduled physical shared channels. A plurality of physical shared channels in at least one cell (for example, the first cell) of the plurality of cells are jointly scheduled by using the DCI. The plurality of cells may correspond to one type of SCS, that is, SCSs of the plurality of cells are the same. Alternatively, the plurality of cells may correspond to at least two types of SCSs.

Before the network device sends the DCI to the terminal, the terminal may send first capability information and second capability information to the network device, where the first capability information indicates that the terminal supports multi-cell scheduling, and the second capability information indicates that the terminal supports scheduling of a plurality of physical shared channels in a same cell. In other words, when the terminal supports multi-cell scheduling and supports scheduling of a plurality of physical shared channels in a same cell, the network device sends the DCI in S501 to the terminal.

In a possible implementation, to avoid a resource conflict, the following information may be restricted in a communication protocol: The terminal does not expect that a same cell is configured to support multi-cell joint scheduling and repetition (repetition) transmission of physical shared channels of the cell.

The following describes in detail the DCI mentioned in S501. For ease of description, a quantity of the plurality of cells scheduled by using the DCI is denoted as P below, and P is an integer greater than 1.

The DCI includes one or more of the following three fields: a first field, a second field, and a third field. The following describes the three fields.
1. The first field includes a first subfield and a second subfield, the first subfield is applied to the N physical shared channels in the first cell, the second subfield is applied to one physical shared channel in a second cell, and the second cell is one of the plurality of cells scheduled by using the DCI other than the first cell. The first cell is any cell, of the P cells, in which a plurality of physical shared channels are scheduled by using the DCI, and the second cell is any cell, of the P cells, in which only one physical shared channel is scheduled by using the DCI.

It may be understood as that a quantity of subfields in the first field is P, and a subfield in the first field is in one-to-one correspondence with a cell in the P cells. In other words, P pieces of information may be configured for the P cells by using the P subfields in the first field. The subfield in the first field is applied to all physical shared channels that are in a cell corresponding to the subfield and that are scheduled by using the DCI. In other words, the subfield in the first field is used to configure information for the physical shared channels in the cell corresponding to the subfield. To be specific, when a plurality of physical shared channels in a cell (for example, the first cell mentioned in this application) of the P cells are scheduled by using the DCI, a subfield corresponding to the cell is used to configure a same piece of information for all the physical shared channels that are in the cell and that are scheduled by using the DCI.

The first field may be a frequency domain resource assignment (frequency domain resource assignment, FDRA) field or a modulation and coding scheme (modulation and coding scheme, MCS) field. It should be noted that the first field mentioned in this application may be understood as any one of a type of field (which may be referred to as a first-type field for ease of differentiation), and the DCI may include a plurality of fields whose type is the first-type field. For example, when the DCI includes the FDRA field and the MCS field, the FDRA field may be referred to as the first field mentioned in this application, and the MCS field may also be referred to as the first field mentioned in this application. Similarly, the second field mentioned in this application may be understood as any one of second-type fields, and the third field mentioned in this application may be understood as any one of third-type fields. It should be further noted that, in this application, a field whose type is the first-type field may indicate different information for physical shared channels in different cells, and indicate same information for different physical shared channels in a same cell. A field whose type is the second-type field may indicate same information for different physical shared channels. A field whose type is the third-type field may indicate different information for different physical shared channels.

For example, DCI 1 is used to schedule a cell 1 and a cell 2, where a PDSCH 1 and a PDSCH 2 in the cell 1 are scheduled by using the DCI 1, and a PDSCH 3 in the cell 2 is scheduled by using the DCI 1. The DCI 1 includes the MCS field. The MCS field includes a subfield #1 and a subfield #2. The subfield #1 indicates an MCS corresponding to the cell 1 (that is, the PDSCH 1 and the PDSCH 2 in the cell 1 correspond to a same MCS), and the subfield #2 indicates an MCS corresponding to the cell 2 (that is, an MCS corresponding to the PDSCH 3 in the cell 2).

Before the network device sends the DCI to the terminal, the network device may further send second configuration information to the terminal. The second configuration information is used to configure whether a subfield in the first field is used to configure a same piece of information for all physical shared channels that are scheduled by using the DCI and that are in a cell corresponding to the subfield. Alternatively, it is understood as that the network device may indicate, by using the second configuration information, whether one piece of information configured by using the subfield in the first field is applied to all the physical shared channels that are scheduled by using the DCI and that are in the cell corresponding to the subfield. The second configuration information may be carried in RRC signaling.

For example, cells that need to be jointly scheduled include the cell 1 and the cell 2. The cell 1 is an FR 1 cell, and a slot interval corresponding to the cell 1 is usually long. Channel quality conditions in adjacent slots may change, and corresponding MCS requirements may be different. The cell 2 is an FR 2 cell, and a slot interval corresponding to the cell 2 is usually short. Channel quality conditions in adjacent slots are close, and corresponding MCS requirements may be the same. In this case, before sending the DCI 1 to schedule the cell 1 and the cell 2, the network device sends the second configuration information to the terminal. The second configuration information indicates the subfield #1 that corresponds to the cell 1 and that is in the MCS field, and indicates different MCSs for different physical shared channels in the cell 1. In other words, the subfield #1 of the MCS field in the DCI 1 subsequently carries a plurality of pieces of information indicating the MCSs, and the plurality of pieces of information indicating the MCSs are in one-to-one correspondence with the physical shared channels in the cell 1. The second configuration information indicates the subfield #2 that corresponds to the cell 2 and that is in the MCS field, and indicates a same MCS for different physical shared channels in the cell 2. In other words, the subfield #2 of the MCS field in the DCI 1 subsequently carries only one piece of information indicating the MCS, and the one piece of information indicating the MCS is applied to all the physical shared channels that are scheduled by using the DCI 1 and that are in the cell 1.

2. The second field is applied to M physical shared channels in the P cells, and values of the second field of the M physical shared channels are the same.

It may be understood as that a same piece of information is configured for the M physical shared channels by using the second field, that is, information configured in the second field is applied to the M physical shared channels. Alternatively, it may be understood as that the values of the second field corresponding to the M physical shared channels are the same.

When the physical shared channel is a PDSCH, the second field may be any one of the following: an identifier for DCI formats (identifier for DCI formats) field, a bandwidth part (bandwidth part, BWP) indicator field, a time domain resource assignment (time domain resource assignment, TDRA) field, a virtual resource block to physical resource block mapping (virtual resource block to physical resource block mapping, VRB-to-PRB mapping) field, a physical resource block (physical resource block, PRB) bundling (bundling) size indicator field, a rate matching indicator field, a zero power channel state information reference signal trigger field, a downlink assignment index (downlink assignment index) field, a transmission power control command for scheduled PUCCH (transmission power control command for scheduled PUCCH, TPC command for scheduled PUCCH) field, a PUCCH resource indicator field, a PDSCH-to-HARQ feedback timing indicator (PDSCH-to-HARQ feedback timing indicator) field, a one-shot HARQ feedback information request (One-shot HARQ-ACK request) field, an enhanced Type-3 codebook indicator field, a HARQ-ACK retransmission indicator field, a transmission configuration indicator field, a sounding reference signal (sounding reference signal, SRS) request field, an SRS offset indicator field, a demodulation reference signal sequence initialization indicator field, or a priority indicator field.

When the physical shared channel is a PUSCH, the second field may be any one of the following: an identifier for DCI formats field, a BWP indicator field, a TDRA field, a frequency hopping flag (frequency hopping flag) field, a downlink assignment index field, an SRS request field, an SRS offset indicator field, a channel state information (channel state information request, CSI) request field, a demodulation reference signal sequence initialization indicator field, or a priority indicator field.

It should be noted that time domain resources of different physical shared channels in a same cell are different. The following uses an example in which the second field is the TDRA field for description.

In a possible implementation, the TDRA field indicates a first index value (or a value of the TDRA field is a first index value), the first index value indicates a second index value group, a second index value in the second index value group is in one-to-one correspondence with a cell among the plurality of cells, the second index value indicates a time domain resource set, and the time domain resource set includes time domain resources of different physical shared channels in the cell corresponding to the second index value. The time domain resource includes one or more of the following information: a value of *K*₀, a start symbol of a physical shared channel, a quantity of time domain symbols of the physical shared channel, and mapping type (mapping type) information. The start symbol of the physical shared channel and the quantity of time domain symbols of the physical shared channel may be indicated by using a start and length indicator value (start and length indicator value, SLIV).

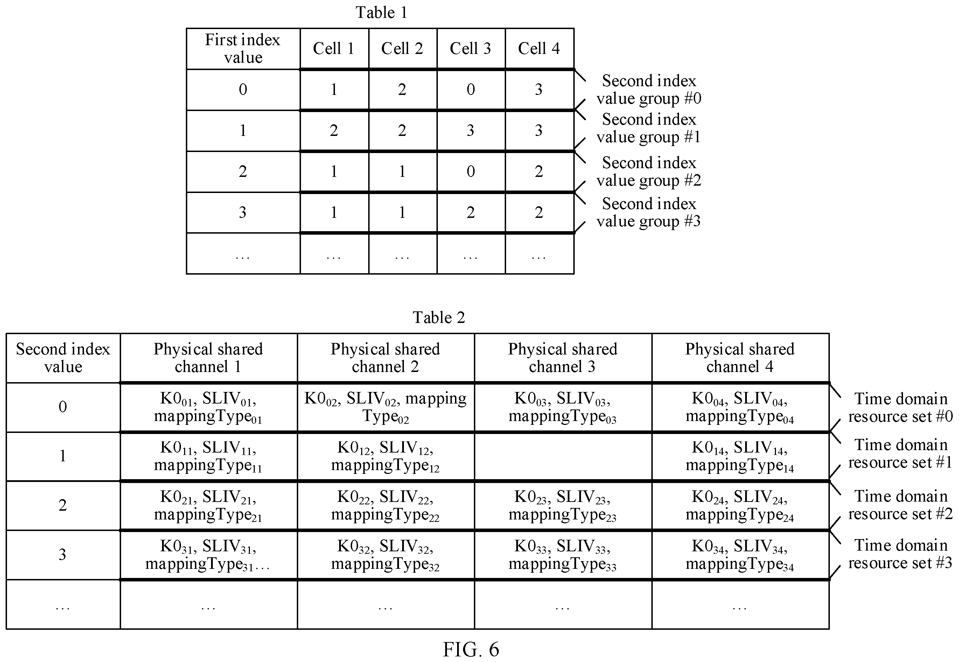

For example, the plurality of cells scheduled by using the DCI include a cell 1 to a cell 4, and four physical shared channels in each cell may be scheduled by using the DCI. A correspondence between the first index value and the second index value group may be shown in Table 1 in FIG. 6. Each first index value corresponds to one second index value group (that is, a row in Table 1 in FIG. 6), each second index value group includes four second index values (#0, #1, #2, and #3), and the four second index values in each second index value group are in one-to-one correspondence with the cell 1 to the cell 4. A correspondence between the second index value and the time domain resource set may be shown in Table 2 in FIG. 6. Each second index value indicates one time domain resource set (that is, one row of Table 2 in FIG. 6), and a time domain resource set in each row includes a time domain resource of a scheduled physical shared channel in a cell. A quantity of columns of physical shared channels in Table 2 is a quantity of schedulable physical shared channels in one cell. In this case, if the TDRA field in the DCI indicates that the first index value is 1, a plurality of second index values included in a second index value group #1 are determined based on the first index value as follows: A second index value of the cell 1 is 2, a second index value of the cell 2 is 2, a second index value of the cell 3 is 3, and a second index value of the cell 4 is 3. The following uses an example in which a time domain resource of the cell 1 is determined based on the second index value of the cell 1 for description. For determining a time domain resource of another cell based on a second index value of the corresponding cell, refer to this manner. The second index value corresponding to the cell 1 is 2, and a time domain resource set #2 that is indicated by the second index value and that corresponds to the cell 1 includes: a time domain resource corresponding to a physical shared channel 1 in the cell 1: [K0₂₁, SLIV₂₁, mappingType₂₁], a time domain resource corresponding to a physical shared channel 2 in the cell 1: [K0₂₂, SLIV₂₂, mappingType₂₂], a time domain resource corresponding to a physical shared channel 3 in the cell 1: [K0₂₃, SLIV₂₃, mappingType₂₃], and a time domain resource corresponding to a physical shared channel 4 in the cell 1: [K0₂₄, SLIV₂₄, mappingType₂₄].

It should be noted that the time domain resource set corresponding to the second index value includes one or more time domain resources. For example, when the DCI is used to schedule the plurality of physical shared channels in the first cell and one physical shared channel in the second cell, and it is determined, based on the TDRA field in the DCI, that the first cell corresponds to a second index value #1 and the second cell corresponds to a second index value #2, the second index value #1 indicates one time domain resource set, where the time domain resource set includes time domain resources of the plurality of physical shared channels that are scheduled by using the DCI and that are in the first cell, and the second index value #2 indicates one time domain resource, where the time domain resource is a time domain resource of the physical shared channel that is scheduled by using the DCI and that is in the second cell.

Before the network device sends the DCI to the terminal, the network device may further send third configuration information to the terminal. The third configuration information is used to configure the correspondence between the first index value and the second index value group, and configure the correspondence between the second index value and the time domain resource set. The third configuration information may be carried in RRC signaling.

It may be understood that the third configuration information may further implicitly indicate a maximum quantity of physical shared channels that can be jointly scheduled and that is in a cell. When actual scheduling is subsequently performed by using DCI, an actual quantity of physical shared channels scheduled by using the DCI may be less than or equal to the maximum quantity. For example, the third configuration information is used to configure the correspondence between the second index value and the time domain resource set shown in Table 2 in FIG. 6, and a time domain resource corresponding to the physical shared channel 3 in the time domain resource set #1 in Table 2 is null. In this case, the third configuration information implicitly indicates that the maximum quantity of schedulable physical shared channels in the cell is 4. In subsequent actual scheduling, if the TDRA field indicates that the time domain resource set of the cell is the time domain resource set #1, the actual quantity of physical shared channels that are scheduled by using the DCI and that are in the cell is 3, that is, the physical shared channel 3 in the cell is not scheduled.

It should be noted that joint scheduling of physical shared channels of which transmission is performed in a plurality of consecutive slots is supported in a same cell, and/or joint scheduling of physical shared channels of which transmission is performed in a plurality of non-consecutive slots is supported in a same cell. When the third configuration information indicates that a physical shared channel in a cell is not actually scheduled, when the bits of DCI are sequenced, the TDRA field is located before the FDRA field.

Before the network device sends the DCI to the terminal, the network device may further send first configuration information to the terminal. The first configuration information indicates a maximum quantity of physical shared channels that can be jointly scheduled by using the DCI and that are in each cell. When actual scheduling is subsequently performed by using the DCI, an actual quantity of physical shared channels scheduled by using the DCI may be less than or equal to the maximum quantity. Optionally, a maximum quantity of PDSCHs that can be jointly scheduled by using the DCI and that are in each cell and a maximum quantity of PUSCHs that can be jointly scheduled by using the DCI and that are in each cell may be indicated by using a same piece of first configuration information, or may be indicated by using different pieces of first configuration information. It should be noted that the first configuration information to the third configuration information mentioned in this application may be carried in a same RRC message, or may be carried in different RRC messages.

The maximum quantity of physical shared channels that can be jointly scheduled by using the DCI and that are in each cell may be a predefined value. The predefined value may be adjusted based on a specific application scenario. A specific value of the predefined value is not limited in this application. For example, it is predefined that the maximum quantity of physical shared channels that can be jointly scheduled by the using DCI and that are in each cell is 8. Alternatively, the maximum quantity may be determined based on an SCS of each cell. In a possible implementation, a larger SCS of a cell indicates a larger maximum quantity of physical shared channels that can be jointly scheduled and that are in the cell. For example, a maximum quantity of physical shared channels that can be jointly scheduled by using the DCI and that are in a cell whose SCS is 30 kHz is 2, a maximum quantity of physical shared channels that can be jointly scheduled by using the DCI and that are in a cell whose SCS is 60 kHz is 4, and a maximum quantity of physical shared channels that can be jointly scheduled by using the DCI and that are in a cell whose SCS is 120 kHz is 8. Alternatively, the maximum quantity may be determined based on third capability information of the terminal. The third capability information indicates a maximum quantity of physical shared channels that can be jointly scheduled, which is supported by the terminal, by using the DCI and that are in a same cell. In other words, before the network device sends the DCI to the terminal, the terminal sends the third capability information to the network device. The third capability information, and the first capability information and the second capability information may be carried in a same message, or may be carried in different messages.

3. The third field includes M subfields, and the M subfields are respectively applied to the M physical shared channels.

It may be understood that the subfields in the third field are in one-to-one correspondence with the M physical shared channels. In other words, M pieces of information may be configured for the M physical shared channels by using the M subfields in the third field. To be specific, a quantity of subfields included in the third field is determined based on a quantity of actually scheduled physical shared channels.

The third field may be a redundancy version (redundancy version, RV) indicator field, a new data indicator (new data indicator, NDI) field, or a HARQ process number (HARQ process number) field.

For example, the third field is a HARQ process number field, and a HARQ process number of one physical shared channel is indicated by using four bits. In this case, the third field needs 4M bits to indicate HARQ process numbers of the M physical shared channels.

When the DCI includes the third field, because quantities of actually scheduled physical shared channels are different, sizes of the DCI may be different. To avoid inconsistent understanding of the sizes of the DCI by the terminal and the network device, the sizes of the DCI need to be aligned. A maximum value (set as Smax) of a corresponding DCI size is determined based on different values of the TDRA field configured by using RRC signaling. When the network device determines the size of the DCI, the size of the DCI is aligned to Smax. In other words, when an actual size of the DCI is less than Smax, the end of the DCI is padded with zeros until the size of the DCI is equal to Smax. For the terminal, the maximum value (set as Smax) of the corresponding DCI size may also be determined based on different values of the TDRA field configured by using RRC signaling. During blind detection, the terminal performs blind detection by using Smax as the size of the DCI. For example, in Table 1 in FIG. 6, when the first index value is 0, a corresponding DCI size is S1; when the first index value is 1, a corresponding DCI size is S2; when the first index value is 2, a corresponding DCI size is S3; or when the first index value is 3, a corresponding DCI size is S4. If S1 is a maximum value in S1 to S4, the network device aligns the DCI sizes to S1, and the terminal performs blind detection on the DCI based on the DCI size being S1.

In addition, a quantity of subfields included in the third field may alternatively be determined based on a maximum quantity of cells that can be scheduled by using the DCI in one-time scheduling and a maximum quantity of physical shared channels that can be scheduled in one-time scheduling and that are in one cell, where both the maximum quantities are configured by using RRC signaling. For example, if the DCI can be used to schedule a maximum of Pmax cells in one-time scheduling, and the DCI can be used to schedule a maximum of Nmax physical shared channels in one cell in one-time scheduling, the third field includes Pmax*Nmax subfields.

S502: The terminal and the network device perform transmission of the M physical shared channels.

When the physical shared channel is a PUSCH, the terminal sends, to the network device, M PUSCHs scheduled by using the DCI. Correspondingly, the network device receives, from the terminal, the M PUSCHs scheduled by using the DCI. When the physical shared channel is a PDSCH, the network device sends, to the terminal, M PDSCHs scheduled by using the DCI. Correspondingly, the terminal receives, from the network device, the M PDSCHs scheduled by using the DCI.

When the physical shared channel is a PDSCH, after the terminal receives the M PDSCHs from the network device, the terminal sends HARQ feedback information to the network device, where a quantity of bits of the HARQ feedback information is a quantity of TBs carried on maximum quantities of schedulable PDSCHs in the P cells. Alternatively, it is understood as that a sum of quantities of TBs carried on maximum quantities of PDSCHs that can be jointly scheduled in all of the P cells is a quantity of bits of the HARQ feedback information.

It should be noted that, in this application, a quantity of TBs carried on the PDSCH is one or more. In addition, in this application, quantities of TBs carried in PDSCHs may be different or may be the same. For ease of description, an example in which each PDSCH carries one TB is used below for description, and should not be considered as a specific limitation on this application.

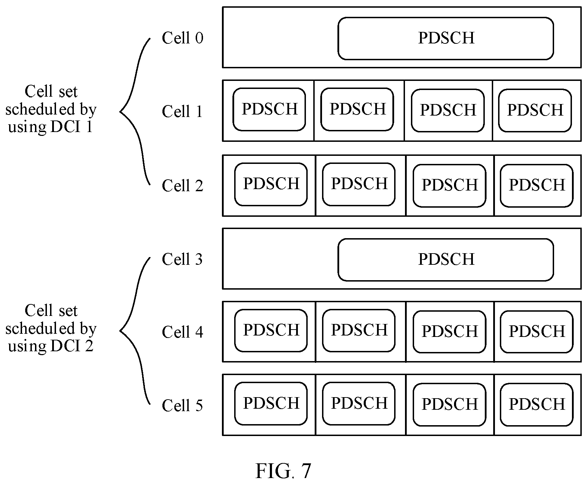

Example 1: The network device sends an RRC message to the terminal. As shown in FIG. 7, it is configured in the RRC message that a cell set scheduled by using DCI 1 includes a cell 0 to a cell 2, and a cell set scheduled by using DCI 2 includes a cell 3 to a cell 5. Maximum quantities of PDSCHs that can be jointly scheduled and that are on CC 0 and CC 3 are 1, and maximum quantities of PDSCHs that can be jointly scheduled and that are on CC 1, CC 2, CC 4, and CC 5 are 4. Each PDSCH is configured with only one TB. A quantity of bits of HARQ feedback information corresponding to the DCI 1 is a quantity of TBs (that is, nine TBs) of maximum quantities of schedulable PDSCHs in the cell 0 to the cell 2, that is, 9 bits. A quantity of bits of HARQ feedback information corresponding to the DCI 2 is a quantity of TBs (that is, nine TBs) of maximum quantities of schedulable PDSCHs in the cell 3 to the cell 5, that is, 9 bits.

In an actual scheduling process, an actual quantity of PDSCHs that are actually scheduled and that are in a cell is less than or equal to a maximum quantity of schedulable PDSCHs that are configured and that are in the cell. Based on this, the HARQ feedback information may be designed to include a plurality of bit groups. A bit group is in one-to-one correspondence with a cell among the plurality of cells, a bit in the bit group is in one-to-one correspondence with a TB of a physical downlink shared channel in the cell corresponding to the bit group, and a bit in the bit group indicates whether a TB corresponding to the bit is successfully received. When a bit indicates that a TB corresponding to the bit is not successfully received, a PDSCH carrying the TB may fail to be sent, or may not be scheduled.

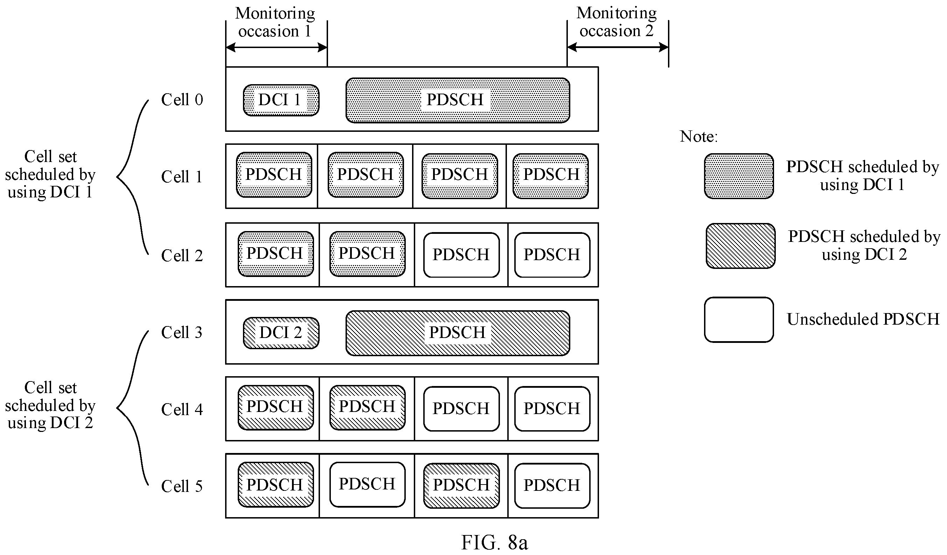

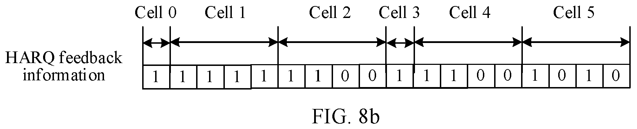

Based on Example 1, configuration of a monitoring occasion of the cell 0 is the same as configuration of a monitoring occasion of the cell 3. The terminal receives the DCI 1 on the monitoring occasion of the cell 0, and the terminal receives the DCI 2 on the monitoring occasion of the cell 3. In addition, in an actual scheduling process shown in FIG. 8a, the DCI 1 is used to actually schedule seven PDSCHs in the cell 0 to the cell 2, and the DCI 2 is used to actually schedule six PDSCHs in the cell 3 to the cell 5. In the DCI 1, a C-DAI is 1, and a T-DAI is 2. In the DCI 2, a C-DAI is 2, and a T-DAI is 2. The terminal receives the 13 PDSCHs based on the DCI 1 and the DCI 2, and generates HARQ feedback information shown in FIG. 8b for the received PDSCHs. An information bit (namely, a bit group mentioned in this application) that corresponds to each cell and that is in the HARQ feedback information indicates whether a TB carried on a PDSCH in each cell is successfully received.

It should be noted that when a HARQ codebook includes both HARQ feedback information corresponding to DCI for scheduling a single cell and HARQ feedback information corresponding to DCI for scheduling a plurality of cells, the HARQ codebook includes a first-stage sub-codebook and a second-stage sub-codebook. The first-stage sub-codebook is the HARQ feedback information corresponding to DCI for scheduling a single cell, the second-stage sub-codebook is the HARQ feedback information corresponding to DCI for scheduling a plurality of cells, the two sub-codebooks are cascaded, and the second-stage sub-codebook is located behind the first-stage sub-codebook. In this application, the foregoing HARQ feedback information corresponding to the DCI is located in the second-stage sub-codebook. In the second-stage sub-codebook, a sequence of HARQ feedback information corresponding to a plurality of pieces of DCI is determined based on a C-DAI indication carried in each piece of DCI. For example, in FIG. 8a, the C-DAI of the DCI 1 is less than the C-DAI of the DCI 2, and in the HARQ feedback information, PDSCHs scheduled by using the DCI 1 are first fed back, and PDSCHs scheduled by using the DCI 2 are first fed back. In the second-stage sub-codebook, a feedback sequence of a plurality of PDSCHs scheduled by using a same piece of DCI is determined based on a sequence of time units used by the network device to send the PDSCHs. For example, in FIG. 8b, a PDSCH sent in a slot with earlier time (that is, a relatively left position) is fed back first, and a PDSCH sent in a slot with later time (that is, a relatively right position) is fed back later.

In a possible implementation, to avoid interleaving of PDSCH processing processes and reduce complexity of PDSCH decoding, in the communication protocol, scheduling constraint may further be performed, to restrict that an earliest time unit (for example, slot) in which a PDSCH is sent and that is scheduled by using first DCI is not earlier than a latest time unit in which a PDSCH is sent and that is scheduled by using second DCI, where a time unit for sending the first DCI is later than a time unit for sending the second DCI. This implementation helps avoid out-of-sequence scheduling of PDSCHs.

In conclusion, in a scenario in which physical shared channels in a plurality of cells are scheduled by using a single piece of DCI, one or more physical shared channels in each cell may be scheduled by using the DCI. Compared with a manner in which only one physical shared channel in a same cell can be scheduled by using DCI, this manner helps improve scheduling efficiency of scheduling physical shared channels by using DCI. For example, in a scenario in which the cell 1 and the cell 2 can be jointly scheduled by using DCI, the physical shared channel 1 and the physical shared channel 2 in the cell 1 need to be scheduled, and a physical shared channel 3 and a physical shared channel 4 in the cell 2 need to be scheduled. If only one physical shared channel in a same cell can be scheduled by using DCI, at least two pieces of DCI are required. Nevertheless, according to the communication method provided in FIG. 5, the physical shared channel 1 to the physical shared channel 4 can be scheduled by using a single piece of DCI, thereby improving scheduling efficiency of scheduling the physical shared channels by using the DCI.

It may be understood that, to implement functions in the foregoing embodiment, the terminal includes corresponding hardware structures and/or software modules for performing the functions. A person skilled in the art should be easily aware that, in combination with the units and the method steps in the examples described in embodiments disclosed in this application, this application can be implemented by hardware or a combination of hardware and computer software. Whether a function is performed by hardware or hardware driven by a transceiver unit of computer software depends on specific application scenarios and design constraint conditions of the technical solutions.

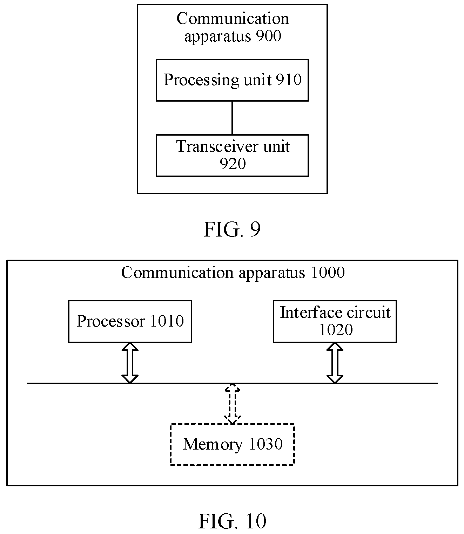

FIG. 9 and FIG. 10 each are a diagram of a structure of a possible communication apparatus according to an embodiment of this application. The communication apparatuses may be configured to implement functions of the terminal in the foregoing method embodiments. Therefore, beneficial effects of the foregoing method embodiments can also be implemented. In embodiments of this application, the communication apparatus may be the terminal 120 shown in FIG. 1, or may be a module (for example, a chip) used in the terminal, or the communication apparatus may be the network device 110 shown in FIG. 1, or may be a module (for example, a chip) used in the network device.

As shown in FIG. 9, a communication apparatus 900 includes a processing unit 910 and a transceiver unit 920. The communication apparatus 900 is configured to implement functions of the terminal in the method embodiment shown in FIG. 5. When the communication apparatus 900 is configured to implement the functions of the terminal in the method embodiment shown in FIG. 5, the transceiver unit 920 is configured to receive downlink control information DCI from a network device, where the DCI is used to schedule M physical shared channels in a plurality of cells, a first cell is one of the plurality of cells, the first cell includes N physical shared channels scheduled by using the DCI, N is an integer greater than 1, and M is an integer greater than N; and the transceiver unit 920 is further configured to perform transmission of the M physical shared channels based on the DCI.

In a possible implementation, the DCI includes a first field, the first field includes a first subfield and a second subfield, the first subfield is applied to the N physical shared channels in the first cell, the second subfield is applied to one physical shared channel in a second cell, and the second cell is one of the plurality of cells other than the first cell.

In a possible implementation, the DCI includes a second field, and values of second fields of the M physical shared channels are the same.

In a possible implementation, the second field is a time domain resource assignment TDRA field, the TDRA field indicates a first index value, the first index value indicates a second index value group, a second index value in the second index value group is in one-to-one correspondence with a cell among the plurality of cells, the second index value indicates a time domain resource set, and the time domain resource set includes time domain resources of different physical shared channels in the cell corresponding to the second index value.

In a possible implementation, the DCI includes a third field, the third field includes M subfields, and the M subfields are respectively applied to the M physical shared channels.

In a possible implementation, the physical shared channel is a physical downlink shared channel, and the transceiver unit 920 is further configured to send HARQ feedback information to the network device, where a quantity of bits of the HARQ feedback information is a quantity of transport blocks carried on maximum quantities of schedulable physical downlink shared channels in the plurality of cells.

In a possible implementation, the HARQ feedback information includes a plurality of bit groups, a bit group in the plurality of bit groups is in one-to-one correspondence with a cell among the plurality of cells, a bit in the bit group is in one-to-one correspondence with a transport block of a physical downlink shared channel in the cell corresponding to the bit group, and a bit in the bit group indicates whether a transport block corresponding to the bit is successfully received.

In a possible implementation, the transceiver unit 920 is further configured to send first capability information and second capability information to the network device, where the first capability information indicates that the terminal supports multi-cell scheduling, and the second capability information indicates that the terminal supports scheduling of a plurality of physical shared channels in a same cell.

In a possible implementation, the transceiver unit 920 is further configured to receive first configuration information from the network device, where the first configuration information is used to configure a maximum quantity of schedulable physical shared channels in each of the plurality of cells.

For more detailed descriptions of the transceiver unit 920 and the processing unit 910, refer to related descriptions of the terminal in the method embodiment shown in FIG. 5.

As shown in FIG. 9, a communication apparatus 900 includes a processing unit 910 and a transceiver unit 920. The communication apparatus 900 is configured to implement functions of the network device in the method embodiment shown in FIG. 5. When the communication apparatus 900 is configured to implement the functions of the network device in the method embodiment shown in FIG. 5, the transceiver unit 920 is configured to send downlink control information DCI to the terminal, where the DCI is used to schedule M physical shared channels in a plurality of cells, a first cell is one of the plurality of cells, the first cell includes N physical shared channels scheduled by using the DCI, N is an integer greater than 1, and M is an integer greater than N, and the transceiver unit 920 is further configured to perform transmission of the M physical shared channels based on the DCI.

In a possible implementation, the DCI includes a first field, the first field includes a first subfield and a second subfield, the first subfield is applied to the N physical shared channels in the first cell, the second subfield is applied to one physical shared channel in a second cell, and the second cell is one of the plurality of cells other than the first cell.

In a possible implementation, the DCI includes a second field, and values of second fields of the M physical shared channels are the same.

In a possible implementation, the second field is a time domain resource assignment TDRA field, the TDRA field indicates a first index value, the first index value indicates a second index value group, a second index value in the second index value group is in one-to-one correspondence with a cell among the plurality of cells, the second index value indicates a time domain resource set, and the time domain resource set includes time domain resources of different physical shared channels in the cell corresponding to the second index value.

In a possible implementation, the DCI includes a third field, the third field includes M subfields, and the M subfields are respectively applied to the M physical shared channels.

In a possible implementation, the physical shared channel is a physical downlink shared channel, and the transceiver unit 920 is further configured to receive HARQ feedback information from the terminal, where a quantity of bits of the HARQ feedback information is a quantity of transport blocks carried on maximum quantities of schedulable physical downlink shared channels in the plurality of cells.

In a possible implementation, the HARQ feedback information includes a plurality of bit groups, a bit group in the plurality of bit groups is in one-to-one correspondence with a cell among the plurality of cells, a bit in the bit group is in one-to-one correspondence with a transport block of a physical downlink shared channel in the cell corresponding to the bit group, and a bit in the bit group indicates whether a transport block corresponding to the bit is successfully received.

In a possible implementation, the transceiver unit 920 is further configured to receive first capability information and second capability information from the terminal, where the first capability information indicates that the terminal supports multi-cell scheduling, and the second capability information indicates that the terminal supports scheduling of a plurality of physical shared channels in a same cell.

In a possible implementation, the transceiver unit 920 is further configured to send first configuration information to the terminal, where the first configuration information is used to configure a maximum quantity of schedulable physical shared channels in each of the plurality of cells.

For more detailed descriptions of the transceiver unit 920 and the processing unit 910, refer to related descriptions of the network device in the method embodiment shown in FIG. 5.

As shown in FIG. 10, a communication apparatus 1000 includes a processor 1010 and an interface circuit 1020. The processor 1010 and the interface circuit 1020 are coupled to each other. It may be understood that the interface circuit 1020 may be a transceiver or an input/output interface. Optionally, the communication apparatus 1000 may further include a memory 1030, configured to store instructions executed by the processor 1010, store input data required by the processor 1010 to run instructions, or store data generated after the processor 1010 runs instructions. When the communication apparatus 1000 is configured to implement the method shown in FIG. 5, the processor 1010 is configured to implement a function of the processing unit 910, and the interface circuit 1020 is configured to implement a function of the transceiver unit 920.

When the communication apparatus is a chip used in a terminal, the chip in the terminal implements functions of the terminal in the foregoing method embodiments. That the chip in the terminal receives information from a base station may be understood as that the information is first received by another module (for example, a radio frequency module or an antenna) in the terminal, and then sent by these modules to the chip in the terminal. That the chip in the terminal sends information to a base station may be understood as that the information is first sent to another module (for example, a radio frequency module or an antenna) in the terminal, and then sent by these modules to the base station. When the communication apparatus is a chip used in a network device, the chip in the network device implements functions of the network device in the foregoing method embodiments. That the chip in the network device receives information from a terminal may be understood as that the information is first received by another module (for example, a radio frequency module or an antenna) in the network device, and then sent by these modules to the chip in the network device. That the chip in the network device sends information to a terminal may be understood as that the information is delivered to another module (for example, a radio frequency module or an antenna) in the network device, and then sent by these modules to the terminal.

In this application, that an entity A sends information to an entity B may be that A directly sends the information to B, or may be that A indirectly sends the information to B via another entity. Similarly, that the entity B receives information from the entity A may be that the entity B directly receives information sent by the entity A, or may be that the entity B indirectly receives information sent by the entity A via another entity. The entity A and the entity B herein each may be a RAN node or a terminal, or may be a module in a RAN node or a terminal. Information sending and receiving may be information exchange between a RAN node and a terminal, for example, information exchange between a base station and a terminal. Information sending and receiving may alternatively be information exchange between two RAN nodes, for example, information exchange between a CU and a DU. Information sending and receiving may alternatively be information exchange between different modules in an apparatus, for example, information exchange between a chip in a terminal and another module in the terminal, or information exchange between a chip in a base station and another module in the base station.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or may be any regular processor.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be located in a base station or a terminal. The processor and the storage medium may exist in a base station or a terminal as discrete components.

All or some of the foregoing embodiments may be implemented by software, hardware, firmware, or any combination thereof. When embodiments are implemented by software, all or some of embodiments may be implemented in a form of a computer program product. The computer program product includes one or more computer programs or instructions. When the computer program or the instructions are loaded and executed on a computer, all or some of procedures or functions in embodiments of this application are performed. The computer may be a general-purpose computer, a dedicated computer, a computer network, a network device, user equipment, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium accessible by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, "at least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. In the text descriptions of this application, the character "/" usually indicates an "or" relationship between the associated objects. In a formula in this application, the character "/" indicates a "division" relationship between the associated objects. "Including at least one of A, B, and C" may indicate: including A; including B; including C; including A and B; including A and C; including B and C; and including A, B, and C.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, wherein the method comprises:
receiving downlink control information DCI from a network device, wherein the DCI is used to schedule M physical shared channels in a plurality of cells, a first cell is one of the plurality of cells, the first cell comprises N physical shared channels scheduled by using the DCI, N is an integer greater than 1, and M is an integer greater than N; and
transmitting the M physical shared channels based on the DCI.

2. The method according to claim 1, wherein the DCI comprises a first field, the first field comprises a first subfield and a second subfield, the first subfield is applied to the N physical shared channels in the first cell, the second subfield is applied to one physical shared channel in a second cell, and the second cell is one of the plurality of cells other than the first cell.

3. The method according to claim 1 or 2, wherein the DCI comprises a second field, and values of the second field of the M physical shared channels are the same.

4. The method according to claim 3, wherein the second field is a time domain resource assignment TDRA field, the TDRA field indicates a first index value, the first index value indicates a second index value group, a second index value in the second index value group is in one-to-one correspondence with a cell among the plurality of cells, the second index value indicates a time domain resource set, and the time domain resource set comprises time domain resources of different physical shared channels in the cell corresponding to the second index value.

5. The method according to any one of claims 1 to 4, wherein the DCI comprises a third field, the third field comprises M subfields, and the M subfields are respectively applied to the M physical shared channels.

6. The method according to any one of claims 1 to 5, wherein the physical shared channel is a physical downlink shared channel, and the method further comprises:
sending HARQ feedback information to the network device, wherein a quantity of bits of the HARQ feedback information is a quantity of transport blocks carried on maximum quantities of schedulable physical downlink shared channels in the plurality of cells.

7. The method according to claim 6, wherein the HARQ feedback information comprises a plurality of bit groups, a bit group in the plurality of bit groups is in one-to-one correspondence with a cell among the plurality of cells, a bit in the bit group is in one-to-one correspondence with a transport block of a physical downlink shared channel in the cell corresponding to the bit group, and a bit in the bit group indicates whether a transport block corresponding to the bit is successfully received.

8. The method according to any one of claims 1 to 7, wherein the method further comprises:
sending first capability information and second capability information to the network device, wherein the first capability information indicates that a terminal supports multi-cell scheduling, and the second capability information indicates that the terminal supports scheduling of a plurality of physical shared channels in a same cell.

9. The method according to any one of claims 1 to 8, wherein the method further comprises:
receiving first configuration information from the network device, wherein the first configuration information is used to configure a maximum quantity of schedulable physical shared channels in each of the plurality of cells.

10. A communication method, wherein the method comprises:
sending downlink control information DCI to a terminal, wherein the DCI is used to schedule M physical shared channels in a plurality of cells, a first cell is one of the plurality of cells, the first cell comprises N physical shared channels scheduled by using the DCI, N is an integer greater than 1, and M is an integer greater than N; and
transmitting the M physical shared channels based on the DCI.

11. The method according to claim 10, wherein the DCI comprises a first field, the first field comprises a first subfield and a second subfield, the first subfield is applied to the N physical shared channels in the first cell, the second subfield is applied to one physical shared channel in a second cell, and the second cell is one of the plurality of cells other than the first cell.

12. The method according to claim 10 or 11, wherein the DCI comprises a second field, and values of the second field of the M physical shared channels are the same.

13. The method according to claim 12, wherein the second field is a time domain resource assignment TDRA field, the TDRA field indicates a first index value, the first index value indicates a second index value group, a second index value in the second index value group is in one-to-one correspondence with a cell among the plurality of cells, the second index value indicates a time domain resource set, and the time domain resource set comprises time domain resources of different physical shared channels in the cell corresponding to the second index value.

14. The method according to any one of claims 10 to 13, wherein the DCI comprises a third field, the third field comprises M subfields, and the M subfields are respectively applied to the M physical shared channels.

15. The method according to any one of claims 10 to 14, wherein the physical shared channel is a physical downlink shared channel, and the method further comprises:
receiving HARQ feedback information from the terminal, wherein a quantity of bits of the HARQ feedback information is a quantity of transport blocks carried on maximum quantities of schedulable physical downlink shared channels in the plurality of cells.

16. The method according to claim 15, wherein the HARQ feedback information comprises a plurality of bit groups, a bit group in the plurality of bit groups is in one-to-one correspondence with a cell among the plurality of cells, a bit in the bit group is in one-to-one correspondence with a transport block of a physical downlink shared channel in the cell corresponding to the bit group, and a bit in the bit group indicates whether a transport block corresponding to the bit is successfully received.

17. The method according to any one of claims 10 to 16, wherein the method further comprises:
receiving first capability information and second capability information from the terminal, wherein the first capability information indicates that the terminal supports multi-cell scheduling, and the second capability information indicates that the terminal supports scheduling of a plurality of physical shared channels in a same cell.

18. The method according to any one of claims 10 to 17, wherein the method further comprises:
sending first configuration information to the terminal, wherein the first configuration information is used to configure a maximum quantity of schedulable physical shared channels in each of the plurality of cells.

19. A communication apparatus, comprising a module configured to perform the method according to any one of claims 1 to 9, or comprising a module configured to perform the method according to any one of claims 10 to 18.

20. A communication apparatus, comprising a processor and an interface circuit, wherein the interface circuit is configured to receive a signal from another communication apparatus other than the communication apparatus and transmit the signal to the processor, or send a signal from the processor to another communication apparatus other than the communication apparatus; and the processor is configured to implement the method according to any one of claims 1 to 9 by using a logic circuit or by executing code instructions, or the processor is configured to implement the method according to any one of claims 10 to 18 by using a logic circuit or by executing code instructions.

21. A computer-readable storage medium, wherein the storage medium stores a computer program or instructions; and when the computer program or instructions are executed by a communication apparatus, the communication apparatus is caused to implement the method according to any one of claims 1 to 9 or implement the method according to any one of claims 10 to 18.

22. A computer program product, wherein the computer program product comprises a computer program or instructions, and when the computer program or the instructions are executed by a communication apparatus, the communication apparatus is caused to implement the method according to any one of claims 1 to 9 or implement the method according to any one of claims 10 to 18.
